# EUROPÄISCHE PATENTSCHRIFT

(11) **EP 3 782 831 B1**
(45) Veröffentlichungstag und Bekanntmachung des Hinweises auf die Patenterteilung: **02.10.2024**
(21) Anmeldenummer: 20000283.0
(22) Anmeldetag: 11.08.2020
(51) Int. Cl.: B60H 1/00, B60N 2/56, B60N 2/70

(54) **EINLEGER FÜR DIE KLIMATISIERUNG EINES FAHRZEUGS SOWIE VERFAHREN ZUM HERSTELLEN EINES EINLEGERS FÜR DIE KLIMATISIERUNG**
INSERT FOR THE AIR CONDITIONING OF A VEHICLE AND METHOD FOR MANUFACTURING AN INSERT FOR AIR CONDITIONING
INSERT DESTINÉ À LA CLIMATISATION D'UN VÉHICULE AINSI QUE PROCÉDÉ DE FABRICATION D'UN INSERT DESTINÉ À LA CLIMATISATION

(30) Priorität: 23.08.2019 DE 202019003492 U
(43) Veröffentlichungstag der Anmeldung: 24.02.2021
(73) Patentinhaber: I.G. Bauerhin GmbH, 63584 Gründau (DE)
(72) Erfinder: Bauer, Stefan, 63755 Alzenau (DE); Wolf, Max-Florian, 63450 Hanau (DE)
(74) Vertreter: Grünecker Patent- und Rechtsanwälte PartG mbB

(56) Entgegenhaltungen:
- EP-A1- 2 617 588
- WO-A1-2019/049831
- DE-A1- 19 927 232
- DE-U1- 29 900 021

## Beschreibung

Die vorliegende Erfindung betrifft einen Einleger für die Klimatisierung eines Fahrzeugs gemäß dem Oberbegriff des Anspruchs 1 sowie ein Verfahren zum Herstellen eines Einlegers für die Klimatisierung gemäß dem Oberbegriff des Anspruchs 10.

Derartige Einleger weisen mindestens ein Abstandsmaterialteil auf, in dem offene, von einer Oberseite bis zu einer gegenüberliegenden Unterseite reichende Bereiche ausgebildet sind. Diese offenen Bereiche bilden eine Luftführungsstruktur. Das mindestens eine Abstandsmaterialteil ist auf der Oberseite und/oder der Unterseite durch mindestens eine Decklage abgedeckt.

Solche Einleger werden nicht nur für die Klimatisierung eines Fahrzeugsitzes eingesetzt, sondern können auch für die Klimatisierung beispielsweise von Innenverkleidungsteilen eines Fahrzeugs verwendet werden.

Für das Abstandsmaterialteil werden Schaumstoff-Materialien, Fasermaterialien oder auch sogenannte Abstandsgewirke verwendet.

Die WO 2019/049831 A1 beschreibt einen Sitz für ein Fahrzeug, der mit einem Polsterelement eines Sitzkissens zum Abstützen einer sitzenden Person ausgestattet ist. Das Polsterelement weist ein erstes und ein zweites Polsterteil auf, die übereinander angeordnet sind, wobei das erste Polsterteil näher an einer Auflagefläche angeordnet ist. Gemäß einer Ausführungsform weist das Polsterelement in seiner Dickenrichtung drei übereinander angeordnete Polsterteile auf, ein Basispolster, ein Zwischenpolster und ein oberes Polster. Belüftungslöcher sind in jedem der Polsterteile ausgebildet, durch die Luft, mittels einer Luftblaseinheit, hindurchgehen kann. Jedes der Belüftungslöcher durchdringt jedes Polsterteil entlang der Dickenrichtung des Polsterelements. Hierdurch soll ein Sitz für ein Fahrzeug bereitgestellt werden, bei dem es möglich ist, eine Fehlausrichtung zwischen den Polsterteilen, die das Polsterelement bilden, während der Verwendung des Sitzes zu vermeiden.

Die DE 29900021 U1 beschreibt eine Sitzbelüftung für die Zufuhr von Luft in die Sitzfläche und/oder Rückenlehnenfläche eines Sitzes, wobei die Zuführung und die Verteilung der Luft über die Zwischenräume der Noppen einer Luftpolsterfolie erfolgt. Diese Luftpolsterfolie ist durch einen Schonbezug abgedeckt. Die Kanäle zwischen den Noppen könnten als netzartige Kanalstruktur angesehen werden, die von einer nicht näher erläuterten Grundschicht vorstehen und durch diese Grundschicht zusammengehalten werden. Eine solche Luftpolsterfolie soll entsprechend der DE 29900021 U1 dazu dienen, eine gleichmäßige Verteilung der Luft mit einem entsprechenden Schichtaufbau zu realisieren.

Die DE 19927232 A1 beschreibt eine Sitz-Klimaanlage für einen Fahrzeugsitz mit einem Polster und einer Gebläseeinheit zum zwangsweisen Blasen klimatisierter Luft in Richtung zu dem Sitz hin. Das Polster besitzt einen Einführungskanal zum Einführen von Blasluft in Richtung zu der Oberfläche des Polsters hin sowie mehrere Verteilungskanäle, die miteinander in Verbindung stehen und sich von dem Einführungskanal aus radial erstrecken, und mehrere Verbindungskanäle, die eine Verbindung zwischen den Verteilungskanälen herstellen. Alle diese Kanäle sind direkt in dem Sitzpolster ausgebildet.

Die EP 2617588 A1 beschreibt eine Vorrichtung zur Klimatisierung und/oder Belüftung eines Innenraums, die ein Innenverkleidungselement, an welchem Ausströmöffnungen ausgebildet sind, umfasst. Durch die Ausströmöffnungen ist Luft in den Innenraum eindringbar. Das Innenverkleidungselement ist als Sandwichstruktur mit einem aus Stegen gebildeten Wabenkern und mit zumindest einer innenseitigen Decklage aufgebaut. Hohlräume zwischen den Stegen des Wabenkerns sind als Kanäle zur Führung der Luft im Innenverkleidungselement ausgebildet, wobei die Stege des Wabenkerns die Begrenzungen der Kanäle bilden. Das Innenverkleidungselement ist ein Dachhimmel.

Die DE 20 2013 006 135 U1 beschreibt eine Klimatisierungseinrichtung für einen Fahrzeugsitz, die ein Abstandsmaterialteil aufweist, das zumindest einen Teil eines Luftverteilungsraums bildet. Das Abstandsmaterial ist auf der Oberseite mit einer Oberseitenschicht und auf der gegenüberliegenden Unterseite mit einer luftundurchlässigen Unterseitenschicht abgedeckt. Die Oberseitenschicht und die Unterseitenschicht sind um den Außenumfang des Abstandsmaterialteils herum miteinander verbunden. Weiterhin sind eine Luftzufuhröffnung zu dem Luftverteilungsraum ebenso wie Luftaustrittsöffnungen in der Oberseitenschicht zur Abgabe von Luft aus dem Luftverteilungsraum vorhanden. Die Oberseitenschicht und die Unterseitenschicht sind um den Außenumfang herum über eine rahmenförmige Einlage miteinander verbunden. Für die rahmenförmige Einlage können ein Schaumstoff-Material oder ein Zellkautschuk eingesetzt werden. Innerhalb des Abstandsmaterialteils, das den Luftverteilungsraum, umschlossen durch die rahmenförmige Einlage, bildet, können sogenannte Inlays eingesetzt sein, d.h. inselförmige Teile, innerhalb derer Durchgangsöffnungen vorhanden sind, die sich sowohl in der Oberseitenschicht und gegebenenfalls auch in der Unterseitenschicht fortsetzen. Diese Durchgangsöffnungen in den Inlays können beispielsweise als Abspannöffnungen für einen Sitzbezug dienen.

Die DE 10 2009 009 057 A1 beschreibt eine Klimatisierungseinrichtung für einen Fahrzeugsitz. An der Unterseite eines Polsters befindet sich eine Ausnehmung, die durch eine Sperrschicht abgedeckt ist. Auf der Innenseite der Sperrschicht sind Vorsprünge oder Abstandselemente angeordnet, die von der Sperrschicht ausgehend in die Ausnehmung des Sitzpolsters hineinragen. An dem Schaum des Polsters, das die Bodenfläche der Ausnehmung auf der der Sperrschicht gegenüber liegenden Seite begrenzt, ist eine Trennschicht vorgesehen, um das Polster von mindestens einem Teil des luftführenden Raums abzutrennen. Diese Trennschicht kann beim Schäumen des Polsters eingeschäumt werden. Eine Folie, ein Textil, ein Gewirke und/oder ein Vlies sind als Material für die Trennschicht angegeben.

Die DE 10 2006 054 860 A1 beschreibt eine Baugruppe zur Klimatisierung einer Sitzfläche, einer Rückenlehnenfläche oder einer Liegefläche. Die Baugruppe kann beispielsweise in einem Fahrzeug eingesetzt werden und weist einen Kern und eine diesen zumindest teilweise überspannende Vlies- oder Stoffschicht auf. In dem Kern sind mehrere zu einer einem Benutzer zugewandten Seite offene und von der Vlies- oder Stoffschicht überdeckte Kanäle ausgebildet, die beispielsweise mäanderförmig verlaufen. Die Kanäle sind mit einem Lüfter verbunden.

Der vorliegenden Erfindung liegt die Aufgabe zugrunde, einen Einleger für die Klimatisierung eines Fahrzeugs zu schaffen, der sich durch einen einfachen Aufbau auszeichnet und sich kostengünstig herstellen lässt, sowie ein Verfahren zum Herstellen eines Einlegers für die Klimatisierung eines Fahrzeugs anzugeben, der einfach und kostengünstig hergestellt werden kann.

Gelöst werden diese Aufgaben durch einen Einleger mit den Merkmalen des Anspruchs 1 sowie durch ein Verfahren mit den Merkmalen des Anspruchs 10. Bevorzugte Ausführungen sind in den abhängigen Ansprüchen angegeben.

Der Einleger gemäß der Erfindung ist dadurch gekennzeichnet, dass die Vielzahl von Kanälen eine netzartige Kanalstruktur bildend verbunden ist, dass die mindestens eine Decklage im Bereich von Verbindungs- oder Kreuzungsstellen der Kanäle jeweils eine Lochung aufweist und dass die Verbindungsstelle zwischen zwei oder mehreren Kanälen ein von der Oberseite bis zu der Unterseite des mindestens einen Abstandsmaterialteils verlaufendes Loch bildet, so dass zwischen den Kanälen inselartige Bereiche des mindestens einen Abstandsmaterialteils, die teilweise voneinander getrennt sind, durch die Decklage zusammengehalten werden. Ein wesentliches Merkmal ist darin zu sehen, dass die mindestens eine Decklage im Bereich von Verbindungs- oder Kreuzungsstellen der Kanäle zumindest eine Lochung, die auch als Durchlochung bezeichnet werden kann, aufweist. Über diese Durchlochung wird die Luft aus den Kanälen der Luftführungsstruktur zur Kühlung der vorgesehenen Zonen eines Fahrzeugs abgegeben. Auf diese Weise ist es insbesondere möglich, die Stellen der Abgabe der Luft aus der Luftführungsstruktur definiert festzulegen, nämlich aus den Löchern, die in der mindestens einen Decklage eingebracht sind. Dadurch, dass die Lochungen in der mindestens einen Decklage an den Verbindungs- oder Kreuzungsstellen der Kanäle angeordnet sind, wird an den jeweiligen Löchern des Abstandsmaterialteils die Luft aus mehreren Kanälen gemischt und reguliert abgegeben.

Folglich umfassen die offenen Bereiche der Luftführungsstruktur eine Vielzahl von Kanälen, die zumindest in Teilbereichen des mindestens einen Abstandsmaterialteils miteinander zu einer netzartige Strömungsbereiche oder Strömungszonen bildenden Kanalstruktur verbunden sind.

Die Kanäle, die innerhalb des mindestens einen Abstandsmaterialteils oder innerhalb der Schicht des mindestens einen Abstandsmaterialteils verlaufen, sind von der Oberseite bis zu der Unterseite des Abstandsmaterialteils offen. Mit einem solchen Aufbau sind die Kanäle, die sich innerhalb des mindestens einen Abstandsmaterialteils oder innerhalb der Schicht des mindestens einen Abstandsmaterialteils befinden, von der Oberseite bis zu der Unterseite des mindestens einen Abstandsmaterialteils frei von Material. Insbesondere sind diese Kanäle lediglich auf der einen Seite des mindestens einen Abstandsmaterialteils zumindest teilweise durch die mindestens eine Decklage abgedeckt. Diese mindestens eine Decklage hält dann die einzelnen Bereiche des mindestens einen Abstandsmaterialteils, die durch die Kanäle voneinander getrennt sind, zusammen.

Eine andere Ausgestaltung des Einlegers sieht die Verwendung von mindestens zwei Decklagen vor, die an der Oberseite und der Unterseite des mindestens einen Abstandsmaterialteils angeordnet sind. Die voneinander getrennten Bereiche werden dann von beiden Decklagen zusammengehalten. Gleichermaßen ist es möglich, auch nur auf einer Seite des mindestens einen Abstandsmaterialteils mehrere Decklagen übereinander anzuordnen. Dann wird die Durchlochung in den übereinander gelegten Decklagen vorgesehen.

Eine weitere Ausgestaltung des Einlegers ist darauf gerichtet, dass auf der einen Seite des mindestens einen Abstandsmaterialteils eine Decklage vorhanden ist oder mehrere Decklagen übereinander angeordnet sind, die mit entsprechender Durchlochung versehen sind. Auch ist vorgesehen, auf der anderen Seite des mindestens einen Abstandsmaterialteils eine Decklage anzuordnen oder mehrere Decklagen übereinander anzuordnen, die keine entsprechende Durchlochung aufweisen, außer derjenigen, die in Strömungsverbindung mit einem Lüfter steht.

An der Verbindungsstelle zwischen zwei oder mehreren Kanälen ist in von der Oberseite bis zu der Unterseite des mindestens einen Abstandsmaterialteils verlaufendes Loch ausgebildet. Bevorzugt ist der Durchmesser des Lochs gleich wie oder größer als die Breite der jeweiligen Kanäle, die auf dieses Loch zulaufen und in dieses Loch münden. Somit ist an der Verbindungsstelle zwischen zwei oder mehreren Kanälen ein sich von der Oberseite bis zu der Unterseite des mindestens einen Abstandsmaterialteils erstreckendes Loch ausgebildet. Demzufolge weisen die Kanäle eine Breite auf, die gleich ist oder geringer ist als die größte Querschnittsabmessung des jeweiligen damit verbundenen Lochs. Die Breite des Kanals ist eine Abmessung senkrecht zu der Länge des Kanals, definiert als die Strecke zwischen zwei Verbindungsstellen jeweils mit einem anderen Kanal, parallel zu der Oberseite und/oder Unterseite des mindestens einen Abstandsmaterialteils. Die Löcher können im Querschnitt eine runde, eine kreisrunde oder ovale, oder auch eine andere an diese Querschnittsformen angenäherte Form aufweisen.

Die Querschnittsabmessung der jeweiligen Lochung in der mindestens einen Decklage entspricht der Querschnittsabmessung des entsprechenden Lochs in dem mindestens einen Abstandsmaterialteil.

Es ist auch vorgesehen, dass die jeweiligen Kanäle über ihre Länge eine im Wesentlichen gleichbleibende Breite aufweisen.

Eine besonders bevorzugte Ausgestaltung der mindestens einen Decklage ist diejenige, dass die mindestens eine Decklage im Bereich der jeweiligen Löcher entsprechend dem Durchmesser des jeweiligen Lochs in dem mindestens einen Abstandsmaterialteil durchbrochen ist.

Die Anordnung der Löcher und der Kanäle können in der Draufsicht auf das mindestens eine Abstandsmaterialteil mit einem zweidimensionalen Atommodell verglichen werden, wobei jedes Loch entsprechend einer Anzahl n, mit n gleich 1, 2, 3, ..., der Kanäle, die von einem Loch ausgehen, eine n-fache Bindung aufweist.

In einer Ausführungsform erstrecken sich die Kanäle in dem mindestens einen Abstandsmaterialteil bis hin zur Randfläche des mindestens einen Abstandsmaterialteils. Die Randfläche des mindestens einen Abstandsmaterialteils ist definiert als eine Umfangsfläche, die das mindestens eine Abstandsmaterialteil um den Außenumfang herum begrenzt, die sich zwischen der Oberseite und der Unterseite des mindestens einen Abstandsmaterialteils befindet.

Die Summe der Flächen der Öffnungsquerschnitte und der Kanalquerschnitte pro Flächeneinheit des mindestens einen Abstandsmaterialteils kann, um eine Luftströmung aus dem mindestens einen Abstandsmaterialteil über dessen Fläche einzustellen, mit zunehmendem Abstand von dem Bereich einer Luftzuführung zunehmen. Hierzu können auch die Öffnungsquerschnitte und/oder die Kanalquerschnitte mit zunehmendem Abstand von dem Bereich der Luftzuführung zunehmend größer ausgeführt werden.

In einer bevorzugten Ausführungsform wird das mindestens eine Abstandsmaterialteil aus einem Schaumstoff-Material gebildet. Ein Schaumstoff-Material ist kostengünstig verfügbar und kann durch die Anzahl und Art der Poren in seiner Nachgiebigkeit und Luftdurchlässigkeit definiert eingestellt werden.

Es ist aber auch vorgesehen, für das mindestens eine Abstandsmaterialteil ein Fasermaterial zu verwenden.

Die Decklage kann aus einem Tüll-Material bestehen, das als dünne Schicht auf das mindestens eine Abstandsmaterialteil aufgebracht ist.

Als Alternative kann die mindestens eine Decklage auch aus einem Vlies, einem Filz, einem Kunststoff, einem Moosgummi oder einem Elastomer gebildet werden. Besonders bevorzugt ist jedoch mindestens eine Decklage aus einem Schaumstoff-Material, vorzugsweise aus einem geschlossenporigen Schaumstoff-Material, der einen Luftaustritt aus den Kanälen des mindestens einen Abstandsmaterialteils nur im Bereich der Löcher bzw. Durchlochungen der mindestens einen Decklage im Bereich der jeweiligen Verbindungs- oder Kreuzungsstellen der Kanäle zulässt, oder aus einem Material, das einem Schaumstoff des mindestens einen Abstandsmaterialteils entspricht.

Die mindestens eine Decklage kann dicker bzw. höher als das mindestens eine Abstandsmaterialteil ausgebildet werden, um mehr Stabilität des mindestens einen Abstandsmaterialteils zu erreichen. Auch kann die Decklage einen sandwichartigen Aufbau aus mehreren übereinander angeordneten Decklagen aufweisen, die aus Materialien der gleichen Materialart gebildet sind, die jedoch untereinander unterschiedliche Materialeigenschaften aufweisen. Alternativ kann die Decklage mit einem sandwichartigen Aufbau aus mehreren übereinander angeordneten Decklagen ausgeführt werden, die aus unterschiedlichen Materialarten gebildet sind. Beispielsweise wird ein Sandwich-Aufbau aus einem Schaum-Vlies verwendet.

In einer bevorzugten Ausführungsform sind mehrere benachbarte Abstandsmaterialteile, die in Bezug auf eine flächenmäßige Ausdehnung den Einleger unterteilen, vorgesehen, wobei benachbarte Abstandsmaterialteile in einem Abstand zueinander, einen kanalartigen Zwischenraum bildend, angeordnet sind. Die jeweilige mindestens eine Decklage der jeweiligen benachbarten Abstandsmaterialteile sind zumindest teilweise miteinander verbunden und die Decklage überspannt den kanalartigen Zwischenraum. Hierbei können die beiden Decklagen der jeweiligen benachbarten Abstandsmaterialteile beispielsweise miteinander verklebt werden oder die Decklagen der jeweiligen benachbarten Abstandsmaterialteile können einstückig ausgebildet sein. Ein Überspannen des kanalartigen Zwischenraums, auch als Grabenbereich bezeichnet, bedeutet auch, dass die Decklage der Kontur des Grabens folgt oder zumindest der Querschnittskontur des Grabenbereichs angenähert ist. Vorteilhafterweise wird eine solche Ausführungsform für belüftete Fahrzeugsitze eingesetzt, bei denen der zentrale Sitzflächenbereich und die seitlichen Wangenbereiche jeweils durch einen kanalartig ausgebildeten Grabenbereich voneinander beabstandet sind. Bei dem erfindungsgemäßen Verfahren zum Herstellen eines erfindungsgemäßen Einlegers für die Klimatisierung eines Fahrzeugs wird vorteilhafterweise in einem ersten Verfahrensschritt mindestens ein Abstandsmaterialteil bereitgestellt und dann werden sich von der Oberseite des mindestens einen Abstandsmaterialteils zu einer der Oberseite gegenüberliegenden Unterseite erstreckenden Kanäle eingebracht. In einem nachfolgenden Verfahrensschritt wird eine Decklage auf die Oberseite und/oder die gegenüberliegende Unterseite des mindestens einen Abstandsmaterialteils aufgebracht. In einem letzten Verfahrensschritt wird zumindest ein Loch in das mindestens eine Abstandsmaterialteil und zumindest eine Lochung in die Decklage eingebracht. Das zumindest eine Loch in dem mindestens einen Abstandsmaterialteil und die zumindest eine Lochung in der mindestens einen Decklage werden gleichzeitig ausgebildet.

Weitere Einzelheiten der Erfindung ergeben sich aus der nachfolgenden Beschreibung von Ausführungsbeispielen anhand der Zeichnung. In der Zeichnung zeigt
- Figur 1: eine schematische, perspektivische Ansicht eines Einlegers gemäß der Erfindung,
- Figur 2: eine Ausschnittsvergrößerung des Bereichs II in Figur 1,
- Figur 3: einen Schnitt entlang der Schnittlinie III-III in Figur 2,
- Figur 4: eine weitere schematische, perspektivische Ausgestaltungsform des erfindungsgemäßen Einlegers mit drei Abstandsmaterialteilen und
- Figur 5: eine Ausschnittsvergrößerung des Bereichs IV in Figur 4.

Der Einleger 1 umfasst, wie die Figuren zeigen, mindestens ein Abstandsmaterialteil 2, das zumindest auf der einen Seite mit mindestens einer Decklage 3 abgedeckt ist.

Das Abstandsmaterialteil 2 ist mit einer Vielzahl von Kanälen 4 durchzogen, die eine netzartige Kanalstruktur bilden. Die Kanäle 4 reichen von einer Oberseite 5 des Abstandsmaterialteils 2, auf der die Decklage 3 angebracht ist, bis zu einer gegenüberliegenden Unterseite 6 des Abstandsmaterialteils 2.

An Verbindungsstellen oder Kreuzungspunkten benachbarter Kanäle 4 ist in dem Abstandsmaterialteil 2 jeweils ein Loch 7 vorhanden, das in dem Abstandsmaterialteil 2 durchgehend von der Oberseite 5 bis zur Unterseite 6 reicht.

Das Abstandsmaterialteil 2 ist vorzugsweise aus einem Schaumstoff-Material gebildet. Es ist aber auch vorgesehen, dass das Abstandsmaterialteil 2 beispielsweise aus einem Fasermaterial besteht.

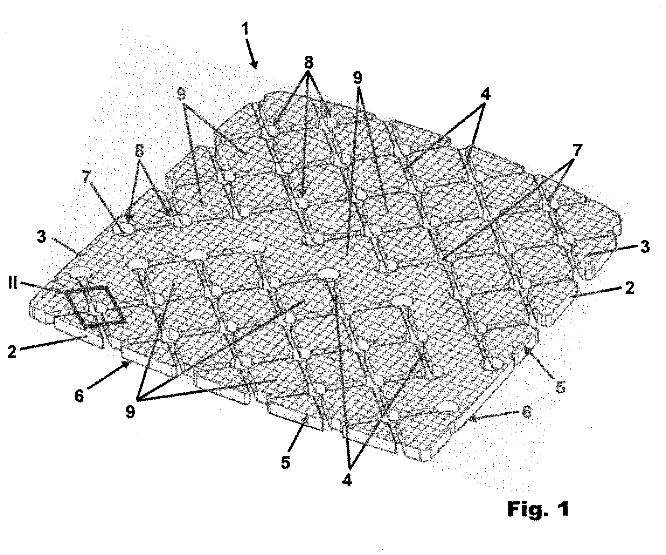

Durch die Wahl der Kanalstruktur kann das mindestens eine Abstandsmaterialteil 2 in Strömungsbereiche oder Strömungszonen unterteilt werden, die voneinander getrennt nur Teilbereiche einer zu klimatisierenden Fläche belüften. Das in Figur 1 dargestellte Ausführungsbeispiel eines Einlegers 1 ist durch die Kanalstruktur in einen vorderen Strömungsbereich und in einen davon getrennten hinteren Strömungsbereich unterteilt und ist beispielsweise für die Klimatisierung einer Sitzfläche eines Fahrzeugsitzes vorgesehen.

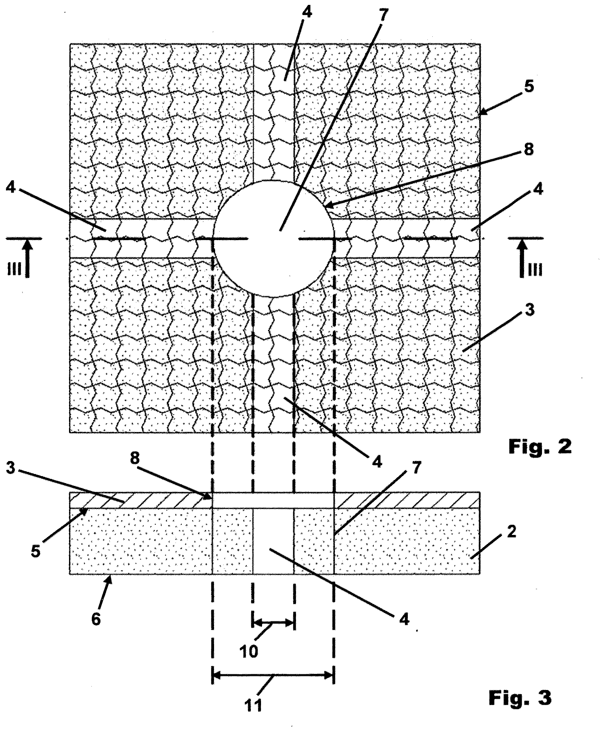

Wie anhand der Figur 1, aber insbesondere auch der Figuren 2 und 3, zu erkennen ist, weist die mindestens eine Decklage 3 im Bereich des Lochs 7 des Abstandsmaterialteils 2 eine Lochung 8 auf, so dass die mindestens eine Decklage 3 an den Stellen, die den Löchern 7 des mindestens einen Abstandsmaterialteils 2 entsprechen, durchbrochen ist.

Vorzugsweise setzen sich somit die Löcher 7 in dem mindestens einen Abstandsmaterialteil 2 in die Lochung 8 der mindestens einen Decklage 3 fort bzw. die Lochung 8 in der mindestens einen Decklage 3 ist deckungsgleich mit den Löchern 7 in dem mindestens einen Abstandsmaterialteil 2.

Durch die netzartig angeordneten Kanäle 4, in dem gezeigten Ausführungsbeispiel in einer rechteckigen oder rechtwinkligen Anordnung zueinander, bilden sich zwischen den Kanälen 4 inselartige Bereiche 9 des mindestens einen Abstandsmaterialteils 2, die teilweise voneinander getrennt sind, die aber durch die mindestens eine Decklage 3, die beispielsweise an der Oberseite 5 des mindestens einen Abstandsmaterialteils 2 befestigt ist, zusammengehalten werden. Es ist auch möglich, dass die mindestens eine Decklage 3 nicht nur an der Oberseite 5 des mindestens einen Abstandsmaterialteils 2, sondern auch an der Unterseite 6 des mindestens einen Abstandsmaterialteils 2, befestigt ist.

Die jeweiligen Kanäle 4 weisen über ihre Länge eine im Wesentlichen gleichbleibende Breite 10 auf. Weiterhin ist anhand der Figuren erkennbar, dass die Breite 10 der jeweiligen Kanäle 4 geringer ist als die Querschnittsabmessung 11 der Löcher 7, in denen die jeweiligen Kanäle 4 enden. Die Figuren 2 und 3 zeigen auch, dass der Durchmesser der Lochung 8 der mindestens einen Decklage 3 dem Durchmesser des Lochs 7 (halber Durchmesser) des mindestens einen Abstandsmaterialteils 2 entspricht.

In der Ausführungsform der Figur 1 sind jeweils vier, drei oder zwei Kanäle 4 über jeweils ein Loch 7 strömungsmäßig miteinander verbunden. Es sind aber auch Kanäle 4 vorhanden, die in einem Loch 7 enden. Des Weiteren sind Kanäle 4 vorhanden, die, von einem Loch 7 ausgehend, im Bereich der Fläche des Außenumfangs 12 des mindestens einen Abstandsmaterialteils 2 enden und somit im Bereich des Außenumfangs 12 offen sind.

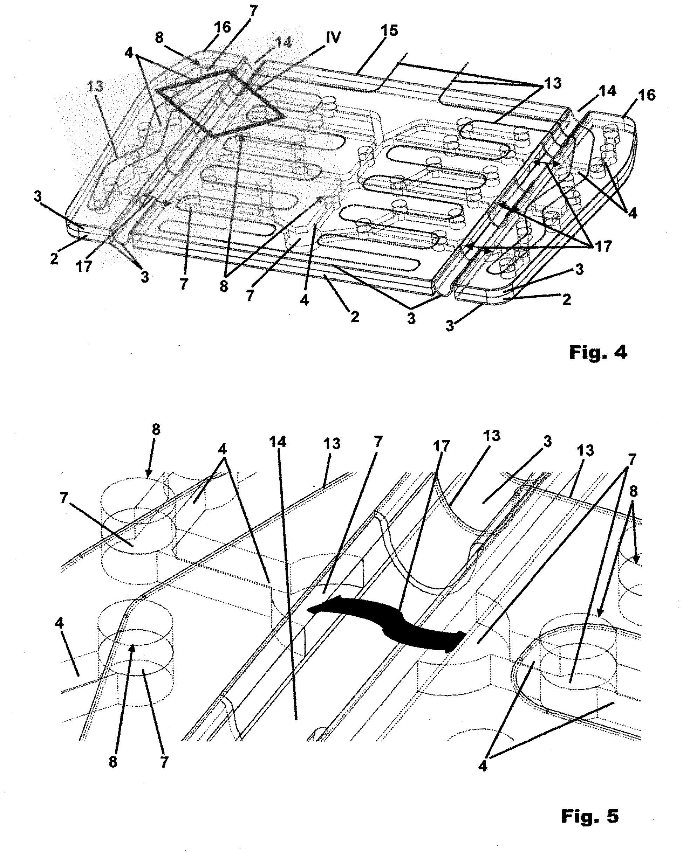

Es ist aber auch möglich, dass zwei der Kanäle 4 in einem halben Loch 7 in der Randfläche (Außenumfang 12) des mindestens einen Abstandsmaterialteils 2 enden. Diese halben Löcher 7 werden im Bereich kanalartiger Grabenbereiche 14, wie in den Figuren 4 und 5 beispielhaft dargestellt, eingesetzt. Das eine halbe Loch 7 ist in der Randfläche (Außenumfang 12) des mindestens einen Abstandsmaterialteils 2 angeordnet und das andere halbe Loch 7 ist in der Randfläche (Außenumfang 12) des mindestens einen Abstandsmaterialteils 2 im Wangenbereich 16,vorzugsweise gegenüberliegend, angeordnet. Mit anderen Worten ausgedrückt ist das eine halbe Loch 7 in der einen Randfläche des mindestens einen Abstandsmaterialteils 2 (im Spiegelbereich 15) so zu dem anderen halben Loch 7 der anderen Randfläche des mindestens einen Abstandsmaterialteils 2 (im Wangenbereich 16) zugeordnet, dass die beiden halben Löcher im verbauten Zustand in Strömungsverbindung für Luft stehen, angedeutet mit dem Bezugszeichen 17 in den Figuren 4 und 5.

Unter dem Begriff Grabenbereich 14 sind beabstandete, kanalartige Bereiche zu verstehen, die beispielsweise bei einem Fahrzeugsitz- und/oder Fahrzeuglehnenkissen bekannt sind. Wie in der Figur 4 und 5 ersichtlich ist, können Grabenbereiche 14 beispielsweise zwischen dem Spiegelbereich 15 (zentraler Sitzbereich bzw. zentraler Lehnenbereich) und den Wangenbereichen 16 eines Fahrzeugsitz- und/oder Fahrzeuglehnenkissens vorhanden sein. Zusätzlich kann zwischen dem Spiegelbereich 16 und einem Sitztiefenverstellungsbereich (nicht dargestellt) ebenfalls ein Grabenbereich vorhanden sein. Unter dem Begriff Sitztiefenverstellung ist der vordere Bereich eines Fahrzeugsitzes, in Fahrtrichtung gesehen, auf dem die Kniebeugen eines Fahrzeuginsassen abgestützt sind, zu verstehen.

In den Grabenbereichen 14 ist kein Abstandsmaterialteil 2 angeordnet, jedoch nicht ausgeschlossen. Die benachbarten Abstandsmaterialteile 2 sind zueinander beabstandet und bilden einen kanalartigen Zwischenraum 14 oder Grabenbereich 14. Die beabstandeten, benachbarten Abstandsmaterialteile 2 sind durch mindestens eine Decklage 3 miteinander verbunden, wobei die mindestens eine Decklage 3 über bzw. durch den Zwischenraum 14 bzw. den Grabenbereich 14 verläuft. Somit wird der Grabenbereich durch die Decklage überbrückt oder überspannt.

Während in den Figuren die Löcher 7 in dem mindestens einen Abstandsmaterialteil 2 als kreisrunde Löcher 7 dargestellt sind, können sie aber auch eine andere Querschnittsform, beispielsweise eine ovale Querschnittsform oder eine eckige Querschnittsform, aufweisen. In diesen Fällen sollte vorzugweise die Abmessung der Lochung 8 in der Decklage 3 der Querschnittsform des Lochs 7 in dem mindestens einen Abstandsmaterialteil 2 angepasst sein.

Ein Lüfter wird, obwohl er nicht in den Figuren dargestellt ist, an geeigneter Stelle so positioniert, dass er der Kanalstruktur der jeweiligen Belüftungszone Luft zuführt oder daraus Luft abführt. Der Lüfter kann dabei direkt oder indirekt mittels eines Kopplungselements mit dem Einleger 1 in Wirkverbindung stehen.

Um eine über die Fläche des mindestens einen Abstandsmaterialteils 2 gesehen gleichmäßige Luftzuführung oder Luftabsaugung zu gewährleisten, wird die Summe der Flächen der Öffnungsquerschnitte der Löcher 7 in dem mindestens einen Abstandsmaterialteil 2 und die Summe der Kanalquerschnitte der Kanäle 4 pro Flächeneinheit des mindestens einen Abstandsmaterialteils 2 mit zunehmendem Abstand von dem Bereich einer Luftzuführung vergrößert.

Obwohl die Decklage 3 vorliegend als netzartige Struktur dargestellt ist, beispielsweise in Form eines Tüllmaterials, ist es gleichermaßen bevorzugt, mindestens eine Decklage 3, ebenso wie das mindestens eine Abstandsmaterialteil 2, aus einem Schaumstoff-Material oder aus einem Vliesstoff zu bilden. Die mindestens eine Decklage 3 wird vorzugsweise auf dem mindestens einen Abstandsmaterialteil 2 verklebt. Hierdurch ergibt sich ein kostengünstiger Aufbau des Einlegers 1.

Das mindestens eine Abstandsmaterialteil 2 könnte aber auch aus einem Fasermaterial, das eine ausreichende Luftdurchlässigkeit aufweist, hergestellt sein.

Die dargestellte Ausführungsform des Einlegers 1 sieht auch vor, zwischen dem mindestens einen Abstandsmaterialteil 2 und der mindestens einen Decklage 3 einen Heizleiter 14 einzufügen. Ein solcher Heizleiter 14 könnte aber auch in die mindestens eine Decklage 3 integriert werden, beispielsweise derart, dass Heizleiter 14 in der mindestens einen Decklage 3 eingewebt sind. Auch könnten Heizleiter 14 auf der dem Abstandsmaterialteil 2 abgewandten Seite angeordnet sein. Der Heizleiter 14 kann mittels Stick-, Näh-, Wirk- oder Klebetechnik mit der mindestens einen Decklage 3 befestigt sein.

## Patentansprüche

1. Einleger (1) für die Klimatisierung eines Fahrzeugs, der mindestens ein Abstandsmaterialteil (2) aufweist, in dem offene, von einer Oberseite (5) bis zu einer gegenüberliegenden Unterseite (6) reichende Bereiche ausgebildet sind, die eine Luftführungsstruktur bilden, wobei das mindestens eine Abstandsmaterialteil (2) auf der Oberseite (5) und/oder auf der Unterseite (6) durch mindestens eine Decklage (3) abgedeckt ist, wobei die offenen Bereiche der Luftführungsstruktur eine Vielzahl von Kanälen (4) umfassen, wobei die Kanäle (4) von der Oberseite (5) bis zu der Unterseite (6) des mindestens einen Abstandsmaterialteils (2) offen sind und wobei die Decklage (3) Lochungen (8) aufweist, die den Kanälen (4) in dem Abstandsmaterialteil (2) zugeordnet sind, und dass die Vielzahl von Kanälen zumindest in Teilbereichen des mindestens einen Abstandsmaterialteils (2) miteinander, Strömungsbereiche oder Strömungszonen bildend, verbunden ist, **dadurch gekennzeichnet, dass** die Vielzahl von Kanälen (4) eine netzartige Kanalstruktur bildend verbunden ist, dass die mindestens eine Decklage (3) im Bereich von Verbindungs- oder Kreuzungsstellen der Kanäle (4) jeweils eine Lochung (8) aufweist und dass die Verbindungsstelle zwischen zwei oder mehreren Kanälen (4) ein von der Oberseite (5) bis zu der Unterseite (6) des mindestens einen Abstandsmaterialteils (2) verlaufendes Loch (7) bildet, so dass zwischen den Kanälen inselartige Bereiche (9) des mindestens einen Abstandsmaterialteils (2), die teilweise voneinander getrennt sind, durch die Decklage (3) zusammengehalten werden.

2. Einleger nach Anspruch 1, **dadurch gekennzeichnet, dass** die jeweiligen Kanäle (4) eine Breite (10) aufweisen, die gleich wie oder geringer ist als die größte Querschnittsabmessung (11) der jeweiligen damit verbundenen Löcher (7).

3. Einleger nach Anspruch 2, **dadurch gekennzeichnet, dass** die mindestens eine Decklage (3) im Bereich der jeweiligen Lochung (8) entsprechend dem Durchmesser des jeweiligen Lochs (7) in dem mindestens einen Abstandsmaterialteil (2) durchbrochen ist.

4. Einleger nach Anspruch 2, **dadurch gekennzeichnet, dass** das jeweilige Loch (7) nur mit zwei benachbarten Löchern (7) über jeweils einen Kanal (4), eine zweifache Verbindung bildend, oder mit weiteren benachbarten Löchern (7) jeweils über einen Kanal (4), eine mehrfache Verbindung bildend, verbunden ist.

5. Einleger nach einem der Ansprüche 1 bis 4, **dadurch gekennzeichnet, dass** das mindestens eine Abstandsmaterialteil (2) aus einem Schaumstoff-Material gebildet ist.

6. Einleger nach einem der Ansprüche 1 bis 5, **dadurch gekennzeichnet, dass** die mindestens eine Decklage (3) aus einem Tüll-Material gebildet ist.

7. Einleger nach einem der Ansprüche 1 bis 6, **dadurch gekennzeichnet, dass** die mindestens eine Decklage (3) aus einem Schaumstoff-Material gebildet ist.

8. Einleger nach einem der Ansprüche 1 bis 7, **dadurch gekennzeichnet, dass** mindestens ein Heizleiter unter, in und/oder auf der mindestens einen Decklage (3) angeordnet ist.

9. Einleger nach einem der Ansprüche 1 bis 8, **dadurch gekennzeichnet, dass** mehrere Abstandsmaterialteile (2), die den Einleger in Bezug auf eine flächenmäßige Ausdehnung unterteilen, vorgesehen sind, wobei benachbarte Abstandsmaterialteile (2) in einem Abstand zueinander, einen kanalartigen Zwischenraum (14) bildend, angeordnet sind, und dass die jeweilige mindestens eine Decklage (3) der jeweiligen benachbarten Abstandsmaterialteile (2) entlang des kanalartigen Zwischenraums (14) zumindest teilweise miteinander verbunden sind.

10. Verfahren zum Herstellen eines Einlegers (1) für die Klimatisierung eines Fahrzeugs mit den Merkmalen nach einem der Ansprüche 1 bis 9, das folgende Verfahrensschritte aufweist: Bereitstellen mindestens eines Abstandsmaterialteils (2), Einbringen von sich von der Oberseite des Abstandsmaterialteils (2) zu einer der Oberseite gegenüberliegenden Unterseite erstreckenden Kanälen (4), Aufbringen mindestens einer Decklage (3) auf die Oberseite (5) und/oder die gegenüberliegende Unterseite (6) des mindestens einen Abstandsmaterialteils (2) und Einbringen von zumindest einem Loch (7) in das mindestens eine Abstandsmaterialteil (2) und von zumindest einer Lochung (8) in die mindestens eine Decklage (3), **dadurch gekennzeichnet, dass** das zumindest eine Loch (7) in das mindestens eine Abstandsmaterialteil und die zumindest eine Lochung (8) in die mindestens eine Decklage (3) gleichzeitig eingebracht werden.

## Claims

1. An insert (1) for the air conditioning of a vehicle, including at least one spacer material part (2), in which open regions are formed that extend from an upper side (5) to an opposite lower side (6) constituting an air guide structure, the at least one spacer material part (2) being covered at the upper side (5) and/or at the lower side (6) by at least one cover layer (3), wherein the open regions of the air guide structure comprise a plurality of channels (4), wherein the channels (4) are open from the upper side (5) to the lower side (6) of the at least one spacer material part (2) and wherein the cover layer (3) includes perforations (8) associated with the channels (4) in the spacer material part (2), and in that the plurality of channels are connected to each other at least in partial regions of the at least one spacer material part (2) forming flow regions or flow zones, **characterized in that** the plurality of channels (4) are connected to form a net-like channel structure, **in that** the at least one cover layer (3) includes a respective perforation (8) in the region of connecting or crossing points of the channels (4), and **in that** the connecting point between two or more channels (4) forms a hole (7) extending from the upper side (5) to the lower side (6) of the at least one spacer material part (2), so that island-like regions (9) of the at least one spacer material part (2) between the channels which are partially separated from each other are held together by the cover layer (3).

2. The insert according to claim 1, **characterized in that** the respective channels (4) have a width (10) which is equal to or less than the largest cross-sectional dimension (11) of the respective holes (7) connected thereto.

3. The insert according to claim 2, **characterized in that** the at least one cover layer (3) is perforated in the region of the respective perforation (8) according to the diameter of the respective hole (7) in the at least one spacer material part (2).

4. The insert according to claim 2, **characterized in that** the respective hole (7) is connected only to two adjacent holes (7) via a respective channel (4), forming a dual connection, or to additional adjacent holes (7) via a respective channel (4), forming a multiple connection.

5. The insert according to any one of claims 1 to 4, **characterized in that** the at least one spacer material part (2) is made of a foam material.

6. The insert according to any one of claims 1 to 5, **characterized in that** the at least one cover layer (3) is made of a tulle material.

7. The insert according to any one of claims 1 to 6, **characterized in that** the at least one cover layer (3) is made of a foam material.

8. The insert according to any one of claims 1 to 7, **characterized in that** at least one heating conductor is arranged under, in and/or on the at least one cover layer (3).

9. The insert according to any one of claims 1 to 8, **characterized in that** a plurality of spacer material parts (2) are provided that divide the surface area of the insert, adjacent spacer material parts (2) being spaced from each other forming a channel-like clearance (14), and **in that** the respective at least one cover layer (3) of the respective adjacent spacer material parts (2) are at least partially connected to each other along the channel-like clearance (14).

10. Method for manufacturing an insert (1) for the air conditioning of a vehicle having the features according to any one of claims 1 to 9, comprising the following steps: providing at least one spacer material part (2), forming channels (4) extending from the upper side of the spacer material part (2) to an underside opposite the upper side, applying at least one cover layer (3) to the upper side (5) and/or the opposite lower side (6) of the at least one spacer material part (2) and forming at least one hole (7) in the at least one spacer material part (2) and at least one perforation (8) in the at least one cover layer (3), **characterized in that** the at least one hole (7) is formed in the at least one spacer material part and the at least one perforation (8) is formed in the at least one cover layer (3) at the same time.

## Revendications

1. Insert (1) pour la climatisation d'un véhicule, qui présente au moins une pièce de matériau d'espacement (2) dans laquelle sont formées des régions ouvertes s'étendant d'une face supérieure (5) à une face inférieure (6) opposée, qui forment une structure de guidage d'air, où l'au moins une pièce de matériau d'espacement (2) est recouverte sur la face supérieure (5) et/ou sur la face inférieure (6) par au moins une couche de couverture (3), où les régions ouvertes de la structure de guidage d'air comprennent une pluralité de canaux (4), où les canaux (4) sont ouverts de la face supérieure (5) jusqu'à la face inférieure (6) de l'au moins une pièce de matériau d'espacement (2) et où la couche de couverture (3) présente des perforations (8) qui sont associées aux canaux (4) dans la pièce de matériau d'espacement (2), et en ce que la pluralité de canaux sont reliés entre eux au moins dans des portions de l'au moins une pièce de matériau d'espacement (2), formant ainsi des régions d'écoulement ou des zones d'écoulement, **caractérisé en ce que** la pluralité de canaux (4) sont reliés en formant une structure de canaux en forme de réseau, **en ce que** l'au moins une couche de couverture (3) présente respectivement une perforation (8) dans la région des points de jonction ou de croisement des canaux (4) et **en ce que** le point de jonction entre deux ou plusieurs canaux (4) forme un trou (7) s'étendant de la face supérieure (5) jusqu'à la face inférieure (6) de l'au moins une pièce de matériau d'espacement (2), de sorte qu'entre les canaux, des régions (9) en forme d'îlots de l'au moins une pièce de matériau d'espacement (2), qui sont partiellement séparées les unes des autres, sont maintenues ensemble par la couche de couverture (3).

2. Insert selon la revendication 1, **caractérisé en ce que** les canaux (4) respectifs présentent une largeur (10) qui est égale ou inférieure à la plus grande section transversale (11) des trous (7) qui leurs sont respectivement reliés.

3. Insert selon la revendication 2, **caractérisé en ce que** l'au moins une couche de couverture (3) est trouée dans la zone de la perforation respective (8) conformément au diamètre du trou respectif (7) dans l'au moins une pièce de matériau d'espacement (2).

4. Insert selon la revendication 2, **caractérisé en ce que** le trou respectif (7) n'est relié qu'à deux trous voisins (7) par un canal respectif (4), formant une liaison double, ou à des trous voisins supplémentaires (7) par un canal respectif (4), formant une liaison multiple.

5. Insert selon l'une des revendications 1 à 4, **caractérisé en ce que** l'au moins une pièce de matériau d'espacement (2) est formée d'un matériau en mousse.

6. Insert selon l'une des revendications 1 à 5, **caractérisé en ce que** l'au moins une couche de couverture (3) est formée d'un matériau en tulle.

7. Insert selon l'une des revendications 1 à 6, **caractérisé en ce que** l'au moins une couche de couverture (3) est formée d'un matériau en mousse.

8. Insert selon l'une des revendications 1 à 7, **caractérisé en ce qu'**au moins un conducteur chauffant est disposé sous, dans et/ou sur l'au moins une couche de couverture (3).

9. Insert selon l'une des revendications 1 à 8, **caractérisé en ce que** sont prévues plusieurs pièces de matériau d'espacement (2) qui subdivisent l'insert en termes d'étendue, où des pièces de matériau d'espacement (2) voisines sont disposées à distance les unes des autres formant ainsi un espace intermédiaire (14) en forme de canal, et **en ce que** l'au moins une couche de couverture (3) respective des pièces de matériau d'espacement (2) voisines respectives sont reliées entre elles au moins partiellement le long de l'espace intermédiaire (14) en forme de canal.

10. Procédé de fabrication d'un insert (1) pour la climatisation d'un véhicule avec les caractéristiques selon l'une des revendications 1 à 9, qui comporte les étapes de procédé suivantes : mise à disposition d'au moins une pièce de matériau d'espacement (2), aménagement de canaux (4) s'étendant depuis la face supérieure de la pièce de matériau d'espacement (2) jusqu'à une face inférieure opposée à la face supérieure, application d'au moins une couche de couverture (3) sur la face supérieure (5) et/ou la face inférieure opposée (6) de l'au moins une pièce de matériau d'espacement (2) et aménagement d'au moins un trou (7) dans l'au moins une pièce de matériau d'espacement (2) et d'au moins une perforation (8) dans l'au moins une couche de couverture (3), **caractérisé en ce que** l'au moins un trou (7) dans l'au moins une pièce de matériau d'espacement et l'au moins une perforation (8) dans l'au moins une couche de couverture (3) sont aménagés simultanément.
